# DEMANDE DE BREVET EUROPEEN

(11) **EP 4 257 665 A2**
(43) Date de publication de la demande: **11.10.2023**
(21) Numéro de dépôt: 23189313.2
(22) Date de dépôt: 29.06.2021
(51) Int. Cl.: C12H 1/07

(54) **VIN BLANC EFFERVESCENT OPACIFIÉ ET SON PROCÉDÉ D'ÉLABORATION**

(30) Priorité: 30.06.2020 FR 2006897
(62) Demande divisionnaire de: 21745372.9
(71) Demandeur: Maison Wessman, 24560 Saint-Cernin-de-Labarde (FR)
(72) Inventeur: WESMAN, Vilhelm Robert, 24560 SAINT CERNIN DE LABARDE (FR)
(74) Mandataire: Herrburger, Pierre

(57) **Abrégé**

Procédé de préparation de charbon actif oenologique finement divisé ayant une granulométrie inférieure ou égale à 5 µm, consistant à :
préparer une suspension mère de charbon actif oenologique à l'état de poudre avec une taille de particules comprise entre 1 et 100 µm dans un liquide alimentaire , homogénéiser (E2) la suspension par une agitation mécanique pour répartir le charbon actif oenologique finement divisé à l'état de poudre dans le liquide alimentaire, désagréger (E3) le charbon actif oenologique finement divisé en suspension par la sonication aux ultrasons,
la suspension est centrifugée trois fois (E41-E43) en recueillant les surna-geants (S41-S42) qui sont prélevés après chaque étape de centrifugation puis
- recueillir le surnageant final,
- concentrer le surnageant final contenant en suspension le charbon actif oenologique finement divisé.

## Description

### DOMAINE DE L'INVENTION

La présente invention se rapporte à un vin effervescent et son procédé d'élaboration, vin blanc effervescent conditionné en bouteille.

Il existe différents procédés d'élaboration de vins blancs effervescents conditionnés en bouteille de volume variable entre les demi-bouteilles, les bouteilles de contenu habituel, les magnums et les différentes autres formes de bouteilles d'un volume plus grand.

En résumé, les vins blancs effervescents les plus connus sont les suivants :
- un vin effervescent obtenu par une première fermentation du moût, puis ajout d'une liqueur de tirage au vin pour effectuer une deuxième fermentation en bouteille appelée « prise de mousse ». Après 15 mois de vieillissement minimum (en champagne), les bouteilles sont remuées (remuage) puis dégorgées (dégorgement) et avant bouchage (liège) définitif, on ajoute la liqueur d'expédition,
- un vin effervescent obtenu selon la méthode en cuve close (ou Charmat) par une première fermentation du moût, la « prise de mousse » s'effectue en cuves closes spéciales, élaborées pour résister à la pression. Lorsque le vin est devenu effervescent (pression voisine de 6bars à 15°C), il est transféré dans des bouteilles après une filtration, puis avant bouchage (liège) définitif, on ajoute de la liqueur de dosage.
- un vin effervescent obtenu selon la méthode ancestrale (ou dioise) par une première fermentation partielle du moût (l'arrêt de la fermentation est obtenu par le froid), les vins sont alors filtrés et les bouteilles sont lavées avant d'être remplies de nouveau. Après une 2nde fermentation en bouteille, ces bouteilles sont remuées puis dégorgées avant bouchage (liège) définitif.
- un vin effervescent obtenu selon la méthode dite de gazéification. Après clarification du vin provenant de la fermentation alcoolique, la pression est obtenue par dissolution directe de gaz carbonique exogène en cuve, suivi d'un transfert en bouteille. Elles sont alors bouchées (liège) de manière définitive avant commercialisation.

### ETAT DE LA TECHNIQUE

Les vins spéciaux comprennent les vins mousseux, provenant de raisins, de moûts ou de vins traités selon les techniques admises par l'OIV, caractérisés, au débouchage, par la production d'une mousse plus ou moins persistante résultant d'un dégagement de dioxyde de carbone d'origine exclusivement endogène. La surpression de ce gaz dans la bouteille est au moins égale à 3,5 bars à 20°C. Toutefois, pour les bouteilles d'une capacité inférieure à 0,25 1, la surpression minimale est ramenée à 3 bars à 20°C.

Selon la technique d'élaboration, les vins mousseux sont dits :
- de seconde fermentation en bouteille,
- de seconde fermentation en cuve close.

Le vin est dit :
- brut lorsqu'il contient au plus 12 g/l de sucre avec une tolérance de +3 g/l,
- extra-sec, lorsqu'il contient au moins 12 g/l et au plus 17 g/l avec une tolérance de +3 g/l,
- sec, lorsqu'il contient au moins 17 g/l et au plus 32 g/l avec une tolérance de +3 g/l,
- demi-sec, lorsqu'il en contient de 32 à 50 g/l,
- doux, lorsqu'il en contient plus de 50 g/l

Les vins effervescents sont également définis et réglementés par le règlement CE 478/2008 qui décrit huit catégories principales de vins effervescents.

La réglementation française distingue quatre catégories.

Les vins effervescents sont, par exemple, obtenus selon la méthode traditionnelle, appelée communément méthode champenoise qui peut se résumer en quelques étapes dont la fermentation du moût puis le vin tranquille est mis en bouteille avec une liqueur de tirage et des levains afin d'effectuer une deuxième fermentation. Après quinze mois minimum de vieillissement, les bouteilles sont remuées (remuage) puis dégorgées (dégorgement) et avant bouchage (liège) définitif, on ajoute la liqueur d'expédition.

Ce vin effervescent existe soit en blanc, soit en rosé. Les caractéristiques quantitatives de ces couleurs ne sont référencées dans aucun codex ou aucune charte technique.

Il existe également des vins rouges effervescents, par exemple, en Italie, le Lambrusco, obtenu par la méthode naturelle, ou par gazéification. Ce vin est traditionnellement rouge avec une robe violacée.

Il existe également le Sparkling Shiraz en Australie qui est un vin rouge effervescent obtenu à partir d'un cépage rouge comme le Lambrusco.

Ces différents vins effervescents rosés ou rouges sont des vins clairs, transparents ou translucides.

Il est également connu que les procédés de vinification utilisent dans certains cas, du charbon actif oenologique (CAO). Ce charbon actif est défini par le Codex CEnologique International (SIN : 53 ; OENO 7/2007). Il est utilisé pour décolorer les moûts ou les désodoriser. Il peut également être utilisé pour des vins. Sur les vins, on extrait le charbon par des étapes de filtration, collage et/ou centrifugation.

Le charbon actif ajouté si nécessaire au moût ayant absorbé les composants chimiques ayant une influence négative au niveau sanitaire ou sensoriel, est évacué avec les dépôts du moût de la cuve après diverses opérations comme le soutirage.

Le vin recueilli de la cuve ne contient plus de charbon actif oenologique.

### BUT DE L'INVENTION

La présente invention a pour but de développer un vin blanc effervescent, opacifié, stable et des moyens pour obtenir notamment un tel vin.

### EXPOSE ET AVANTAGES DE L'INVENTION

A cet effet, l'invention a pour objet un vin blanc effervescent conditionné en bouteille, caractérisé en ce qu'il contient une dose de charbon actif n'altérant pas les propriétés organoleptiques du vin, la dose d'opacifiant se composant d'une suspension dans un liquide alimentaire, de charbon actif oenologique, finement divisé, ayant une granulométrie inférieure ou égale à 5 µm.

De façon préférentielle, le charbon oenologique finement divisé a une granulométrie inférieure à 3 µm pour 90% des particules de charbon actif oenologique.

La granulométrie du charbon actif oenologique selon l'invention est une granulométrie mesurée, par exemple, par le procédé de granulométrie laser. Ce procédé consiste à déterminer le diamètre moyen en volume Dv des particules de charbon actif oenologique. Cette mesure est le diamètre moyen d'une sphère enveloppant un grain de charbon actif oenologique dans son état finement divisé.

Suivant une caractéristique avantageuse, le liquide alimentaire est de l'eau distillée ou du vin.

Selon l'invention, la concentration de charbon actif oenologique finement divisé de la dose est comprise entre 5 et 50 mg.

L'invention a également pour objet un procédé d'élaboration d'un vin blanc effervescent opacifié. Ce procédé se caractérise par l'ajout d'une dose d'opacifiant, avant l'étape finale du bouchage, qui se compose d'une suspension de charbon actif oenologique finement divisé dans un liquide alimentaire, on filtre le concentrat résultant de la sonication à une filtration avec un filtre à 5 µm.

Suivant une autre caractéristique, le procédé d'élaboration d'un vin blanc effervescent consiste à ajouter au moment du tirage, une dose d'opacifiant qui se compose d'une suspension de charbon actif oenologique finement divisé dans un liquide alimentaire, on filtre le concentrat résultant de la sonication à une filtration avec un filtre à 5 µm.

L'invention a également pour objet une suspension de charbon actif oenologique finement divisé dans un liquide alimentaire, on filtre le concentrat résultant de la sonication à une filtration avec un filtre à 5 µm.

L'invention a également pour objet une suspension de dosage d'un vin blanc effervescent avec du charbon actif consistant à utiliser une suspension de 20 g/l de charbon actif oenologique finement divisé.

Un procédé de préparation de charbon actif oenologique selon l'invention consiste à :
- préparer une suspension mère de charbon actif oenologique à l'état de poudre dans un liquide alimentaire,
- homogénéiser la suspension par une agitation mécanique pour répartir le charbon actif oenologique en poudre dans le liquide alimentaire,
- désagréger le charbon actif oenologique en suspension par la sonication aux ultrasons,
- séparer les grosses particules des plus petites par au moins une étape de centrifugation en recueillant le surnageant après chaque étape de centrifugation puis
- recueillir le surnageant final, et
- concentrer le surnageant final contenant en suspension le charbon actif finement divisé.

Ce procédé consiste en outre à :
- centrifuger dans trois étapes successives
- recueillir le surnageant à la fin d'une étape de centrifugation pour le soumettre à l'étape de centrifugation suivante, en répétant au moins trois fois.
   ou encore,
- soumettre le surnageant final recueilli à la fin de l'étape finale à une évaporation et on recueille le concentrat.
   ou encore,
- soumettre le concentrat à une sonication dans un bain à ultrasons. ou encore,
- filtrer le concentrat résultant de la sonication à une filtration avec un filtre à 5 µm.
   ou encore,
- ajouter au concentrat filtré un liquide alimentaire constitué par l'eau ou du vin pour obtenir la liqueur de dosage ou de tirage selon une concentration comprise entre 0,01 et 10g/L de charbon actif oenologique finement divisé.

Le procédé d'élaboration d'un vin blanc effervescent est caractérisé en ce qu'à la première fermentation dite alcoolique, on ajoute une dose comprise entre 0,01 - 1 g/L de charbon actif oenologique, finement divisé (S'2), ayant une granulométrie inférieure ou égale à 5µm.
le procédé d'élaboration d'un vin blanc effervescent est caractérisé en ce qu'à l'étape de la clarification on ajoute une dose comprise entre 0,01 - 1 g/L de charbon actif oenologique, finement divisé (S'2), ayant une granulométrie inférieure ou égale à 5µm.

### BREVE DESCRIPTION DES DESSINS

La présente invention sera décrite ci-après, à l'aide d'un exemple de procédé d'élaboration d'un vin blanc effervescent selon la méthode traditionnelle et opacifié représenté dans les dessins annexés :
[fig. 1] schéma d'élaboration d'un vin blanc effervescent,
[fig. 2] schéma du procédé de préparation de la liqueur de dosage
[fig. 3] schéma d'une variante du procédé de préparation de la liqueur de dosage.

### DESCRIPTION D'UN MODE DE REALISATION

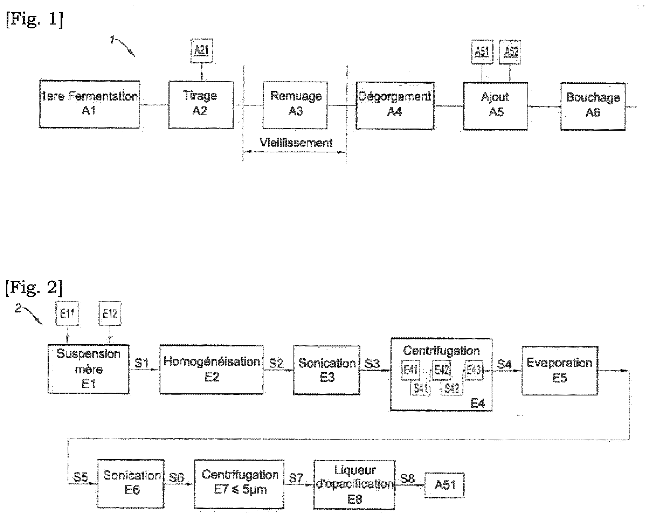

Selon la figure 1, le procédé d'élaboration selon la méthode traditionnelle du vin blanc effervescent 1, opacifié, présenté en bouteille consiste à faire une première fermentation du moût A1, puis le tirage de vin tranquille A2 en bouteille avec ajout d'une liqueur de tirage et des levains A21 ainsi que de la colle ou adjuvant de remuage. Le vin embouteillé vieillit pendant au moins quinze mois. A la fin de cette période de vieillissement, les dépôts accumulés dans le col de la bouteille suite à l'étape du remuage sont éliminés pendant le dégorgement A4. Avant bouchage (liège) définitif, on ajoute la liqueur d'expédition (ou de dosage) A51 avant commercialisation.

Selon l'invention, avant le bouchage final A6, on ajoute en même temps ou avec la liqueur de dosage A51, une dose d'opacifiant A52 qui n'altère pas les propriétés organoleptiques du vin. Puis la bouteille est bouchée.

La figure 2 montre le schéma d'un exemple d'un procédé de préparation d'un charbon actif oenologique et d'un procédé d'élaboration 2 de la liqueur de dosage pour opacifier un vin blanc effervescent.

Le procédé 2 commence par une étape de préparation d'une suspension-mère E1 de charbon actif oenologique E11 dans du liquide alimentaire E12 tel que de l'eau distillée ou mieux du vin.

Le charbon actif oenologique E11 est d'origine végétale à l'état de poudre de fines particules de taille comprise entre 1 et 100 µm. Ce charbon actif oenologique répond aux exigences du CODEX oenologique international (SIN 153 OENO7/2007 ; OIV-OEN 604/218). Cette suspension de charbon actif oenologique S1 ainsi préparée va subir plusieurs traitements pour obtenir une suspension de charbon actif oenologique finement divisé formant la liqueur de dosage aussi fine que possible ayant filtré le concentrat résultant de la sonication à une filtration avec un filtre à 5 µm.

La suspension mère S1 est préparée avec une concentration de l'ordre de 1 à 100 g/L.

La suspension mère S1 est ensuite d'abord homogénéisée E2 par agitation mécanique par exemple.

La suspension mère homogénéisée S2, est soniquée aux ultrasons pendant trois heures E3 pour obtenir une suspension à base de CAO défragmentée S3.

On recueille tout le liquide qui sera soumis à des étapes successives de centrifugation E4.

Dans une première étape de centrifugation E41 effectuée à une vitesse de rotation de l'ordre de 1200 RCF pendant une durée de l'ordre de 30 minutes, on recueille le surnageant S41, c'est-à-dire un volume de suspension dans la partie supérieure du pot utilisé pour la centrifugation.

On soumet ce surnageant à S41 une nouvelle étape de centrifugation E42 pour recueillir un nouveau surnageant S42.

Ces étapes de centrifugation E41, E42, E43 sont effectuées successivement pour aboutir au surnageant final S4.

Les étapes de centrifugation E4 réduisant le volume de liquide, on effectue en parallèle plusieurs séries de centrifugation pour obtenir au final par addition, un volume surnageant final S4.

Le surnageant filtré est ensuite réduit par évaporation E5 avec un taux de réduction donnant entre 1 et 2% de concentrat S5.

Les étapes de centrifugation se font pendant une durée de l'ordre de 30-180 minutes à des vitesses de l'ordre de 500-2200 RCF. Les surnageants sont contrôlés par des mesures de la densité optique DO à 620nm.

Le concentrat S5 est soniqué aux ultrasons pendant trois heures E6 pour obtenir au final un concentrat défragmenté S6. Le concentrat final S7 issu de cette étape E7 est filtré avec un filtre retenant les particules de taille supérieure à 5 microns.

L'analyse du charbon actif oenologique finement divisé ainsi obtenu a été faite par granulométrie laser. Elle a montré que le diamètre moyen en volume Dv des particules de charbon actif oenologique finement divisé était inférieure à 3 microns pour 90% des particules. Le diamètre moyen en volume est, par définition le diamètre de sphère enveloppe ou sphère circonscrite à un grain de charbon actif analysé. Des essais ont monté que le charbon actif oenologique finement divisé selon l'invention reste en suspension de manière particulièrement stable dans le vin.

Pour la préparation d'une suspension de dosage pour opacifier un vin blanc effervescent, le concentrat S7 ainsi recueilli est additionné E8 d'un complément de liquide alimentaire pour obtenir la suspension de dosage S8 (liqueur de dosage).

Cette suspension S8 de dosage est ajoutée A5 au vin blanc embouteillé et dégorgé, avant le bouchage final, en parallèle ou avec la liqueur de dosage / d'expédition.

La concentration de charbon actif oenologique d'une dose est comprise entre 5 et 50 mg /L

La concentration de la liqueur de dosage est avantageusement comprise entre 0, 01 et 10 g/L de charbon oenologique finement divisé.

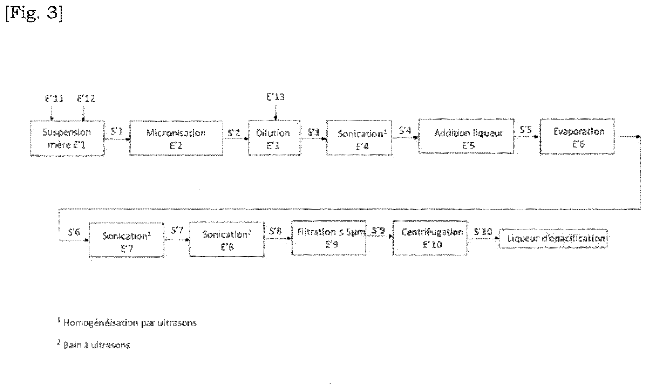

La figure 3 montre le schéma d'une variante du procédé de préparation d'un charbon actif oenologique et d'un procédé d'élaboration de la liqueur de dosage pour opacifier un vin blanc effervescent.

Le procédé 3 commence par une étape de préparation d'une suspension-mère E'1 de charbon actif oenologique E'11 dans du liquide alimentaire E'12 tel que de l'eau distillée ou mieux du vin.

Le charbon actif oenologique E'11 est d'origine végétale à l'état de poudre de fines particules de taille comprise entre 1 et 100 µm. Ce charbon actif oenologique répond aux exigences du CODEX oenologique international (SIN 153 OENO7/2007 ; OIV-OEN 604/218). Cette suspension de charbon actif oenologique S'1 ainsi préparée va subir plusieurs traitements pour obtenir une suspension de charbon actif oenologique finement divisé formant la liqueur de dosage aussi fine que possible.

La suspension mère S'1 est préparée avec une concentration de l'ordre de 50 à 1000 g/L.

La suspension mère S'1 est ensuite finement broyée ou micronisée E'2 en utilisant un broyeur horizontal à microbilles, par exemple un broyeur Netzsch Labstar, utilisant des microbilles métalliques ou d'oxydes métalliques d'un diamètre compris entre 100 - 1000 µm. Le taux de remplissage du broyeur est compris entre 10 - 90 % de sa capacité et la vitesse de rotation est comprise entre 1000 - 5000 tr/min. La durée de broyage est comprise entre 1 - 24 h pour atteindre un taux final en charbon dans la suspension mère S'2 compris entre 1 - 20 % en concentration massique.

La suspension mère micronisée S'2 est diluée E'3 dans du liquide alimentaire E'13 tel que de l'eau déminéralisée.

La suspension mère micronisée et diluée S'3 est désagrégée par une homogénéisation aux ultrasons pendant une durée comprise entre 1 à 15 min E'4 pour obtenir une suspension à base de charbon actif oenologique défragmentée S'4.

On recueille tout le liquide défragmenté auquel on ajoute une quantité de liqueur suffisante E'5, dont le volume total S'5 est réduit par évaporation de 30 - 60 % de son volume initial E'6.

Le concentrat obtenu S'6 est de nouveau désagrégé par une première étape d'homogénéisation par ultrasons pendant une durée comprise entre 1 - 15 min E'7 puis la résultante S'7 est de nouveau soumise à une autre étape de sonication aux bains à ultrasons pendant une durée comprise entre 1 - 3 h E'8. Le temps de l'étape de l'homogénéisation par ultrasons est assez court compte tenu de l'énergie apportée par la sonde et ce afin, d'éviter toute caramélisation de la liqueur.

Le concentrat obtenu S'8 est enfin filtré sur filtres 5 µm E'9 retenant les particules supérieures de 5 µm afin d'obtenir un concentrat filtré S'9 avec des particules inférieures à 5 µm.

Le concentrat filtré est soumis à une centrifugation E'10 pour recueillir un surnageant final S'10.

L'étape de centrifugation s'effectue à une vitesse de rotation comprise entre 2000 - 4000 tr/min pendant une durée de l'ordre de 30 - 180 minutes.

On recueille le surnageant S'10, c'est-à-dire un volume de suspension dans la partie supérieure du tube utilisé pour la centrifugation. On obtient au final la liqueur d'opacification.

L'analyse de la distribution en taille du charbon actif ainsi finement divisé a été faite par granulométrie laser. Elle montre que le diamètre moyen en volume Dv des particules de charbon actif oenologique finement divisé était inférieure à 0,33 micron pour 50% des particules (Le diamètre moyen en volume est, par définition le diamètre de sphère enveloppe ou sphère circonscrite à un grain de charbon actif analysé). Des essais ont montré que le charbon actif oenologique finement divisé selon l'invention reste en suspension de manière particulièrement stable dans le vin.

Cette liqueur d'opacification S'10 de dosage est ajoutée A5 au vin blanc embouteillé et dégorgé, avant le bouchage final, en parallèle ou avec la liqueur de dosage/d'expédition.

La concentration finale en charbon est comprise entre 1 et 50 mg dans une bouteille de 750 mL.

La concentration de la liqueur de dosage est avantageusement comprise entre 0, 01 et 50 g/L de charbon oenologique finement divisé.

## Revendications

1. Procédé de préparation de charbon actif oenologique finement divisé ayant une granulométrie inférieure ou égale à 5 µm, consistant à :
préparer (E1) une suspension mère (S1) de charbon actif oenologique (E12) à l'état de poudre avec une taille de particules comprise entre 1 et 100 µm dans un liquide alimentaire (E11), homogénéiser (E2) la suspension (S1) par une agitation mécanique pour répartir le charbon actif oenologique finement divisé à l'état de poudre dans le liquide alimentaire, désagréger (E3) le charbon actif oenologique finement divisé en suspension par la sonication aux ultrasons,
la suspension (S3) est centrifugée trois fois (E41-E43) en recueillant les surnageants (S41-S42) qui sont prélevés après chaque étape de centrifugation puis
- recueillir le surnageant final S4,
- concentrer (E5) le surnageant final contenant en suspension le charbon actif oenologique finement divisé.

2. Procédé de préparation selon la revendication 1, **caractérisé en ce que** l'étape (E4) de séparation des particules les plus fines possibles par centrifugation consiste à
- centrifuger dans trois étapes successives (E41-E43)
- recueillir le surnageant (E41-E42) à la fin d'une étape de centrifugation pour le soumettre à l'étape de centrifugation suivante, en répétant au moins trois fois l'opération.

3. Procédé de préparation selon la revendication 1, **caractérisé en ce qu'**on soumet le surnageant final recueilli à la fin de l'étape finale à une évaporation (E5) et on recueille le concentrat (S5).

4. Procédé de préparation selon la revendication 3, **caractérisé en ce qu'**on soumet le concentrat (S5) à une sonication (E6) dans un bain à ultrasons.

5. Procédé de préparation selon la revendication 4, **caractérisé en ce qu'**on filtre le concentrat (S6) résultant de la sonication (E6) à une filtration (E7) avec un filtre à 5 µm.

6. Procédé de préparation selon la revendication 5, **caractérisé en ce qu'**on ajoute (E8) au concentrat filtré un liquide alimentaire constitué par de l'eau ou du vin pour obtenir la liqueur de dosage selon une concentration comprise entre 0,01 et 10g/L de charbon actif oenologique finement divisé.

7. Charbon actif oenologique **caractérisé en ce qu'**il se compose de grains de charbon actif oenologique finement divisé ayant une granulométrie inférieure à 5µm.

8. Charbon actif oenologique selon la revendication 7, **caractérisé en ce que** les grains de charbon actif oenologique finement divisé ont une granulométrie inférieure à 3µm pour 90% des particules de charbon.

9. Suspension de charbon actif oenologique finement divisé, **caractérisé en ce qu'**il se compose d'une suspension d'une concentration de l'ordre de 1 à 100 g/l de charbon actif oenologique selon la revendication 15 ou 16 dans un liquide alimentaire.

10. Charbon actif oenologique finement divisé obtenu par le procédé selon les revendications 1 à 6.
